# DEMANDE DE BREVET EUROPEEN

(11) **EP 0 524 071 A1**
(43) Date de publication de la demande: **20.01.1993**
(21) Numéro de dépôt: 92401997.9
(22) Date de dépôt: 09.07.1992
(51) Int. Cl.: G06F 9/46, G06F 13/12

(54) **Système d'exploitation pour dispositif universel de couplage d'un bus d'ordinateur à une liaison spécifique d'un réseau**

(30) Priorité: 15.07.1991 FR 9108907
(71) Demandeur: BULL S.A., F-92800 Puteaux (FR)
(72) Inventeur: Vasseur, Marc, F-75015 Paris (FR); Ravaux, Paul, F-78340 Les Clayes sous Bois (FR)
(74) Mandataire: Gouesmel, Daniel

(57) **Abrégé**

Système d'exploitation (GPOS) pour dispositif universel de couplage (GPU) d'un bus d'ordinateur (PSB) à au moins une liaison spécifique d'un réseau (RN), le dispositif comprenant :
- un microprocesseur (CPU) associé à au moins une mémoire (SRAM) contenant ce système,
- des moyens de transfert des trames (MPC, B₂, VRAM, B₁, DMAC) depuis le bus d'ordinateur vers la liaison,

caractérisé en ce que, étant associé à une pluralité d'application indépendantes entre elles (A₁ à Aₙ), il comprend :
- un noyau central (NY) gérant et organisant en temps réel le travail de chacune des applications,
- un gestionnaire d'application (GA) qui surveille et définit l'état dans lequel doit se trouver chacune des applications,
- un serveur (SA) d'intercommunication pour les applications permettant à chacune d'entre elles de demander les services d'une autre quand cela s'avère nécessaire,
   le noyau, le gestionnaire et les moyens d'intercommunication communiquant entre eux par des appels moniteur.

Utilisable dans les réseaux d'ordinateur.

## Description

La présente invention concerne un système d'exploitation pour dispositif universel de couplage d'un bus d'ordinateur à une liaison spécifique d'un réseau. Elle est notamment applicable aux réseaux de transmission de données reliant entre eux des groupes de périphériques ou terminaux, en particulier aux réseaux en forme d'anneau de type FDDI, dont le support de transmission est constitué par des fibres optiques. Elle est encore applicable à une liaison de type SCSI reliant entre elles des mémoires à disques magnétiques.

Les réseaux de type FDDI à fibres optiques, sont désormais bien connus et définis dans leurs grandes lignes par des normes de standardisation élaborées aussi bien par l'ANSI (American national standard institute) que par l'ISO (International standard organization). La norme ANSI relative au réseau FDDI est la norme X3T9-5.

De même les liaisons de type SCSI sont définies par des normes aussi bien à l'ANSI qu'à l'I.S.O.

Sur un réseau, les messages d'informations émis par les différentes stations sont constitués d'une pluralité de trames constituées chacune de données utiles qui sont encadrées dans le temps par des caractères de commande placés en tête ou en queue de trames.

On sait par ailleurs que l'ensemble des éléments constitutifs fonctionnels d' un ordinateur, qu'il s'agisse des processeurs, des mémoires, ou encore des contrôleurs d'entrée/sortie ou de périphériques sont disposés sur un ensemble de cartes à dimensions normalisées. Ces dernières sont reliées généralement à un même bus de type parallèle assurant les communications entre les différents processeurs, le transport des données entre les cartes et l'alimentation électrique de ces dernières.

Un bus couramment utilisé est le MULTIBUS II (Marque déposée par la Société INTEL), dont l'architecture est structurée autour d'un bus principal de type parallèle, communément appelé PSB (ce qui signifie Parallel System Bus). Le MULTIBUS II est normalisé suivant la norme IEEE 1296 ( Institute of Electrical and Electronic Engineers).

Un tel bus d'ordinateur est relié à la liaison spécifique du réseau (FDDI ou SCSI, etc) par l'intermédiaire d'un dispositif passerelle de connexion dont la fonction est d'adapter les conditions de transmission des informations sur le MULTIBUS II, aux conditions de transmission sur le réseau. En effet, les modes de transmission des données, d'une part sur le bus PSB et d'autre part sur le réseau sont totalement différents, aussi bien en ce qui concerne le débit de transmission des informations, qu'en ce qui concerne les protocoles de transmission utilisés, les codes d'écriture, les informations, le format, les caractères de commandes, la transmission des informations (en parallèle sur le MULTIBUS II, en série sur le réseau FDDI), etc.

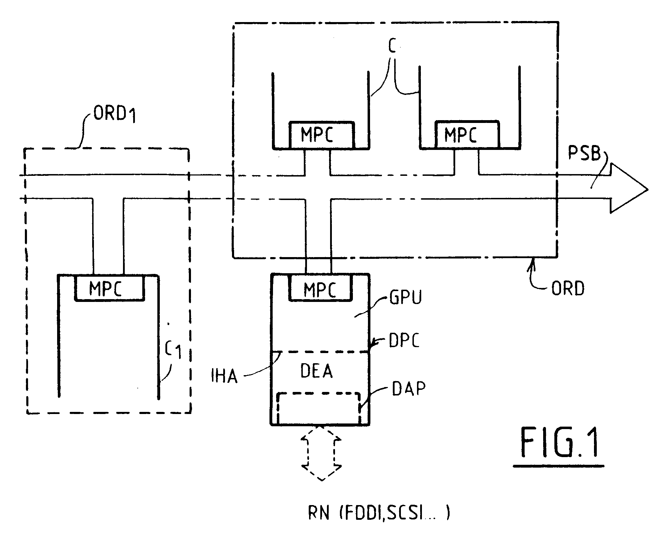

La Figure 1 montre la structure générale d'un tel dispositif passerelle quel que soit le type de réseau de transmission.

Elle montre un ordinateur ORD dont les différents éléments constitutifs sont disposés sur une pluralité de cartes C communicant entre elles par l'intermédiaire du bus parallèle PSB. Chaque carte C est connectée à ce dernier par l'intermédiaire d'un coprocesseur MPC fabriqué par exemple par exemple de type VL 82c389 fabriqué par la Société INTEL, et communiquant par mode message avec les autres éléments de ORD. Ce mode de communication est défini de manière précise dans la norme précitée IEEE 1296.

L'ordinateur ORD est connecté au réseau RN, qui peut être soit de type FDDI, soit SCSI, soit à un autre type de réseau, par l'intermédiaire du dispositif passerelle de connexion DPC. Ce dernier se compose d'une part d'un dispositif universel de couplage GPU (sigle anglais de General Purpose Unit), d'un dispositif adaptateur DEA et d'un interface IHA assurant le transfert des informations entre le dispositif GPU et l'adaptateur DEA.

Le dispositif GPU est relié à PSB par un coprocesseur MPC, du même type que ceux des cartes C de l'ordinateur ORD.

Le dispositif DPC est relié physiquement au réseau RN par l'intermédiaire d'un dispositif d'accès physique au réseau, à savoir DAP, appartenant au dispositif adaptateur DEA.

Il convient de signaler que un ou plusieurs autres ordinateurs tel que ORD₁, peuvent être connectés à ce même bus PSB par l'intermédiaire d'un coprocesseur MPC.

La structure générale du dispositif DPC montrée à la figure 1 ainsi que des modes de réalisation et de fonctionnement du dispositif adaptateur DEA sont décrits dans la demande de brevet français 89 10 156 déposée le 27 juillet 1989 sous le titre "dispositif passerelle de connexion d'un bus d'ordinateur à un réseau fibre optique en forme d'anneau", par la Société demanderesse.

Un mode de réalisation et de fonctionnement préféré du dispositif universel de couplage GPU, est décrit dans la demande de brevet français déposée ce jour conjointement à la présente demande, par la société de demanderesse, et qui a pour titre "Dispositif universel de couplage d'un bus d'ordinateur à un contrôleur d'un groupe de périphériques".

Le système d'exploitation selon l'invention (on dit encore logiciel d'exploitation, l'expression anglo-saxonne étant Operating system) étant mis en oeuvre par le microprocesseur CPU pour organiser et gérer le fonctionnement de GPU, il est utile de rappeler ici quels sont les éléments constitutifs essentiels de ce dernier et quelles sont les grandes lignes de son fonctionnement dont les détails sont exposés dans la demande de brevet conjointe déposée ce jour, étant entendu que la description de celle-ci fait partie intégrante de la présente demande.

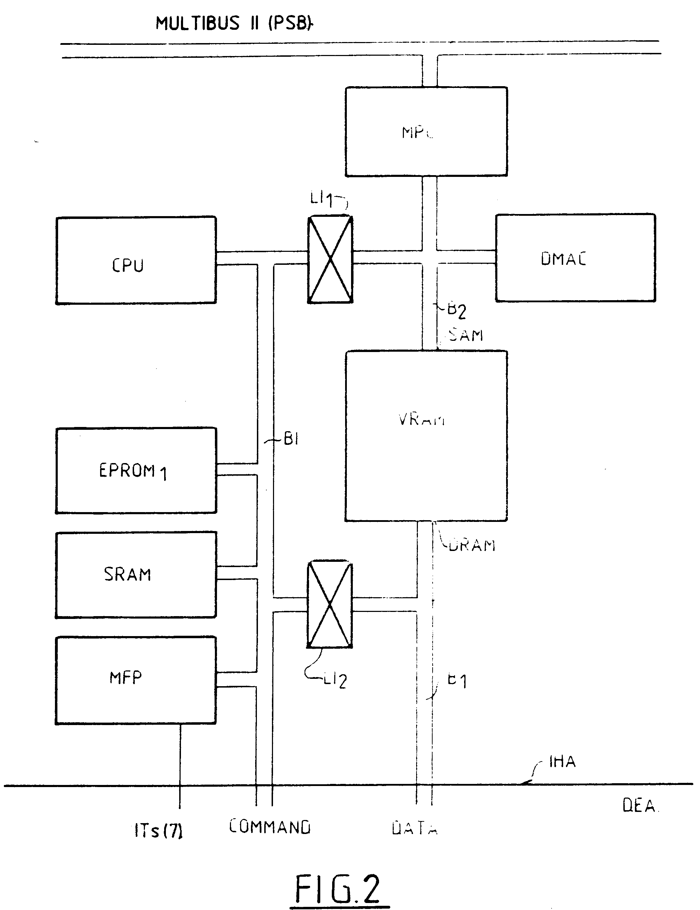

On se reporte à la Figure 2, où l'on a représenté l'interface de transfert IHA entre GPU et DEA par un trait interrompu. On rappelle que cette interface comprend une première interface IHAD permettant de transférer les données utiles depuis ou vers GPU et une seconde interface IHAC pour des blocs de contrôle incluant les caractères de commande des trames reçues ou émises, permettant de transférer ces blocs depuis ou vers GPU.

Le dispositif GPU comprend les différents éléments constitutifs essentiels suivants :
- le coprocesseur MPC qui sert d'interface avec le bus PSB,
- le microprocesseur CPU, qui constitue de fait l'unité centrale du dispositif GPU, muni de son bus interne BI et associé respectivement à une mémoire programmable effaçable EPROM₁, une mémoire vive SRAM, et un gestionnaire d'interruption, à savoir MFP. Les éléments EPROM₁, SRAM, MFP sont tous connectés au bus interne BI , lequel est connecté par ailleurs à l'interface IHAC,
- la mémoire de type vidéo-RAM, à double port, désignée par VRAM,
- le contrôleur d'accès direct mémoire DMAC, connecté au bus B₂ reliant VRAM au coprocesseur MPC,
- le bus B₁ reliant la mémoire VRAM à l'interface IHAD.

Le dispositif GPU comprend également un microcontrôleur non représenté qui a un rôle de servitude pour remettre à zéro chacun des éléments constituant le dispositif de couplage et pour assurer la fonction d'interconnexion de GPU au MULTIBUS II, fonction définie par la norme IEEE1296 précitée.

Le coprocesseur MPC conçu spécialement pour répondre à la norme IEEE1296 précitée est du même type que celui décrit en relation avec la figure 1.

Le microprocesseur CPU est, dans l'exemple de réalisation référé décrit ici, de type 68020 fabriqué par la Firme MOTOROLA. C'est un microprocesseur 32 bits de fréquence d'horloge 25Mhz. Il géré son bus interne BI qui est un bus non multiplexé de 32 bits de données et de 32 bits d'adresse.

La mémoire morte effaçable EPROM₁ d'une capacité de 128 ou 256 Kilo-octets contient les programmes d'auto-tests et d'initialisation de GPU.

Le système d'exploitation selon l'invention est contenu dans la mémoire statique SRAM qui a une capacité pouvant être égale à 512 Kilo-octets ou 1 Méga-octets. Un système de protection est associé à cette mémoire pour en réglementer l'accès et sa description est faite dans la demande de brevet conjoint précitée.

Le système d'exploitation ici désigné par GPOS organise le fonctionnement d'ensemble du microprocesseur et par conséquent supervise le transfert des trames depuis le bus PSB jusqu'à la mémoire VRAM et réciproquement. Par ailleurs, le programme d'adaptation des protocoles utilisés d'une part entre l'ordinateur ORD et le dispositif de couplage via le bus PSB, et d'autre part sur le réseau RN est contenu par exemple dans la mémoire SRAM (il pourrait également être contenu dans la mémoire EPROM₁).

Le microprocesseur CPU est donc le cerveau du dispositif de couplage GPU : il initialise le transfert des données, réalise l'adaptation des protocoles, met en oeuvre son système d'exploitation et transfère les données entre DEA et l'ordinateur ORD et réciproquement tout en dialoguant avec DEA avec lequel il échange des commandes et des status par exemple de la manière indiquée dans la demande de brevet français 89 10156 précitée.

L'élément MFP (Sigle anglo-saxon de Multi function peripheral) est un élément dit "périphérique" du microprocesseur CPU. Il est par exemple de type 68901 de la Firme MOTOROLA et est adapté par construction pour celui-ci. Il supporte un certain nombre de fonctions nécessaires au fonctionnement de ce dernier, par exemple une partie de la gestion des interruptions qui lui sont nécessaires. Il fournit également des fréquences d'horloge, pour le système d'exploitation selon l'invention. Par construction, le microprocesseur de type 68020 a sept niveaux d'interruption, ce qui est insuffisant pour effectuer l'ensemble des opérations dont il a la charge. L'élément MFP fournit en tout 16 niveaux supplémentaires d'interruption dont 8 pour CPU et les 8 autres pour des dispositifs extérieurs (dont 7 pour le dispositif adaptateur DEA, dans un mode de réalisation particulier de ce dernier).

Le contrôleur d'accès direct mémoire DMAC assure les transferts de données entre le coprocesseur MPC et la mémoire VRAM. (il assure également le transfert des données constituant le système d'exploitation et des applications associées vers la mémoire SRAM, dès que les opérations d'initialisation de la carte portant GPU sont terminées. Ce transfert s'effectue depuis les mémoires à disques appartenant par exemple à l'ordinateur ORD).

Pour effectuer un transfert de données, le contrôleur DMAC reçoit de la part de CPU, une adresse de départ (dans VRAM, ou dans SRAM), un compte, c'est à dire le nombre d'octets à transférer, et un ordre de départ pour le transfert des données. Dès qu'il a reçu ces informations de la part de CPU, DMAC organise le transfert.

La mémoire vidéo-RAM VRAM est une mémoire dynamique double port dont la capacité est de l'ordre de 1 à 2 Méga-octets sur une largeur de 32 bits. L'un des deux ports, à savoir SAM est réservé exclusivement au contrôleur DMAC alors que le second port, à savoir DRAM se trouve partagé entre le microprocesseur CPU et le dispositif adaptateur DEA. Cette mémoire sert de tampon pour les données qui transitent entre GPU et le dispositif adaptateur DEA.

Il n'est pas possible d'accéder depuis le dispositif adaptateur DEA, au bus BI depuis le bus B₁. De même, tout transfert de données utiles véhiculés sur le bus B₂ ne peut aller sur BI. Ces deux impossibilités sont symbolisées par l'existence des éléments FLI₁ et FLI₂ disposés respectivement entre les bus B₂ et le bus BI et entre le bus B₁ et BI. Ces éléments sont des éléments d'isolation (ou d'interdiction) logique.

Le transfert des données utiles entre l'interface IHA et la mémoire VRAM d'une part, entre cette dernière et le bus d'ordinateur PSB d'autre part, est organisé par CPU, ce dernier transfert étant effectué sous le contrôle du contrôleur DMAC, la transformation des caractères de commande spécifique des protocoles utilisés sur le bus PSB en ceux utilisés sur la liaison spécifique du réseau RN et réciproquement étant effectuée par le microprocesseur CPU qui assure leur transfert sur son bus interne BI vers ou depuis l'interface IHA (IHAC). L'ensemble du travail effectué par CPU est supervisé et organisé en temps réel par le système d'exploitation selon l'invention, le but de ce dernier étant de faire travailler le microprocesseur CPU au maximum de ses possibilités, pour assurer au dispositif GPU une grande performance, notamment en ce qui concerne les vitesses de transfert des données utiles.

Selon l'invention, le système d'exploitation pour dispositif universel de couplage d'un bus d'ordinateur à une liaison spécifique d'un réseau, le dispositif comprenant :
- un microprocesseur relié par l'intermédiaire de son bus interne à au moins une mémoire contenant le système d'exploitation destiné à être exécuté par le microprocesseur,
- des moyens de transfert de trames depuis le bus d'ordinateur vers la liaison et réciproquement dont le travail est organisé et géré par le microprocesseur,
- est caractérisé en ce que, étant associé à une pluralité d'applications indépendantes entre elles, il comprend :
- un noyau central gérant et organisant le travail en temps réel de chacune des applications, lorsque celle-ci est en train de tourner,
- un gestionnaire d'application qui surveille et définit l'état dans lequel doit se trouver chacune des applications,
- un serveur d'intercommunication pour les applications permettant à chacune d'entre elles de demander les services d'une autre quand cela s'avère nécessaire,
- le noyau, le gestionnaire et les moyens d'intercommunication communiquant entre eux par des appels moniteur, les applications communiquant avec chacun de ces derniers de la même manière.

D'autres caractéristiques et avantages de la présente invention apparaîtront dans la description suivante donnée à titre d'exemple non limitatif et en se référant aux dessins annexés.

Sur ces dessins :
- la Figure 1 montre comment on relie un ordinateur à un réseau de type quelconque par l'intermédiaire d' un dispositif passerelle de connexion,
- la Figure 2 montre les différents éléments constitutifs essentiels de la structure matérielle supportant le système d'exploitation selon l'invention,
- la Figure 3 montre les différents éléments constitutifs essentiels du système d'exploitation selon l'invention et quelques unes de ses applications associées,
- la Figure 4 illustre le contexte général, en terme de couches, dans lequel se situe l'action du système d'exploitation selon l'invention,
- la Figure 5 montre les différents états dans lesquels peut se trouver une application, et comment on peut passer d'un état à l'autre,
- la Figure 6 montre les différents états dans lesquels peut se trouver un processus d'une application, et comment on peut passer d'un état à l'autre,
- la Figure 7 montre la structure d'un sémaphore d'événement ou d'un sémaphore à message,
- la Figure 8 est un organigramme montrant les différentes étapes de fonctionnement d'une application particulière pour transférer sous le contrôle du système d'exploitation les trames depuis le bus d'ordinateur vers le réseau et réciproquement.

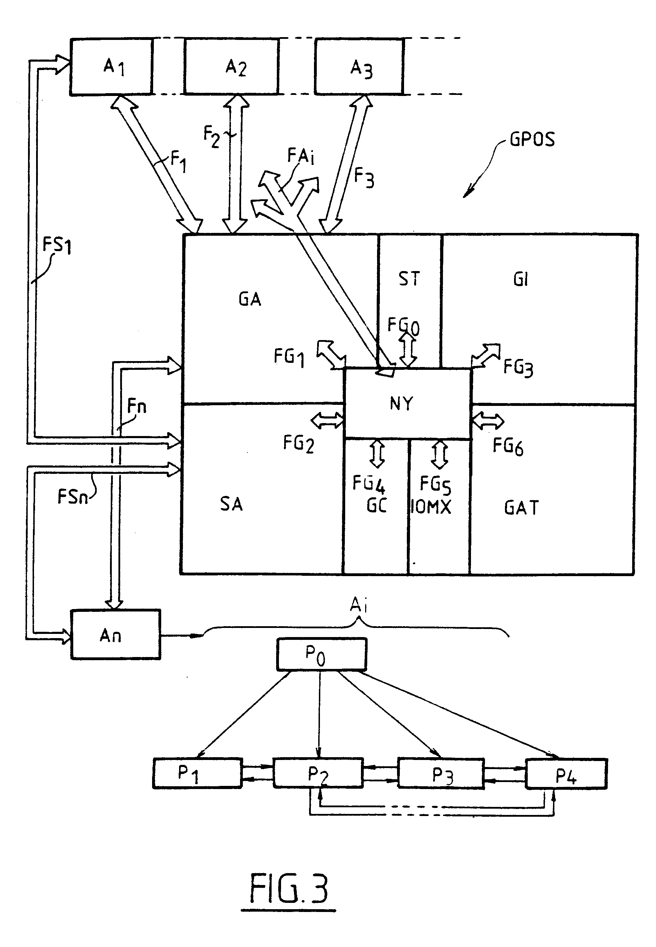

On considère la figure 3 qui montre que le système d'exploitation GPOS selon l'invention est constitué d'un noyau central NY assurant les fonctions de base du système entouré d'une pluralité de gestionnaires assurant chacun une fonction spécifique. Ces gestionnaires sont le gestionnaire d'application GA, le serveur d'intercommunication SA, le gestionnaire d'incidents GI, le starter ST, le gestionnaire de commande GC, le gestionnaire d'accès à terminal GAT, le metteur au point interactif IOMX.

Autour du système d'exploitation GPOS gravitent des applications A₁, A₂,... Aᵢ,....Aₙ qui lui sont de fait associées, chacune de ces applications communiquant et dialoguant avec le noyau central NY et tout ou partie des gestionnaires entourant ce dernier. Les applications sont autonomes et indépendantes entre elles.

Le rôle de chacun des éléments constituant le système GPOS selon l'invention est le suivant :
le noyau central NY effectue la gestion de base du système en gérant et organisant en temps réel le travail de chacune des applications A₁ à Aₙ lorsque l'application en question est en train de tourner. il effectue également la gestion des différentes horloges du système.

Le noyau NY répond aux demandes des gestionnaires quand ceux-ci lui demandent un service, mail il ne prend aucune initiative. Il gère également l'activation des processus composant chacune des applications. De ce fait, le noyau est un fournisseur de services tant pour les gestionnaires que pour les applications.

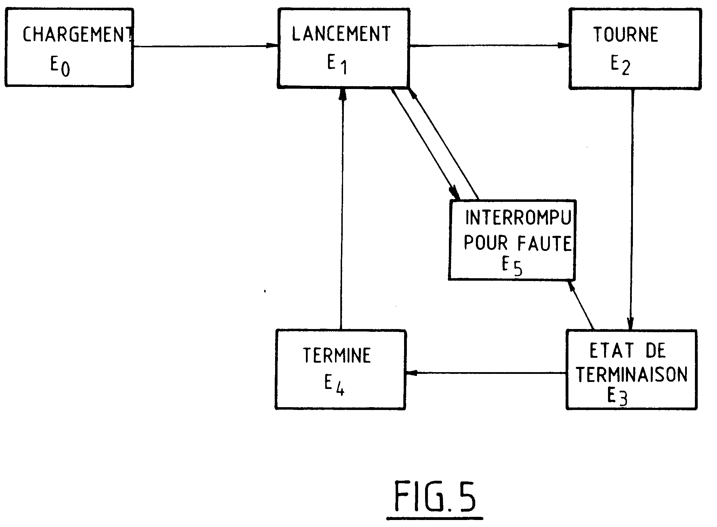

Le gestionnaire d'application GA surveille et définit l'état dans lequel doit se trouver chacune des applications, la définition de ces états étant décrites plus loin en relation avec la figure 5.

Le serveur d'intercommunication pour applications SA permet à chacune d'entre elles de communiquer avec une autre quand cela s'avère nécessaire. Ainsi qu'il a été dit plus haut, chacune des applications étant autonome et indépendante par rapport aux autres, elles ne peuvent communiquer entre elles, (on dit encore interagir), que par l'intermédiaire de ce serveur.

Le starter ST initialise la carte portant GPU du point de vue de ses éléments matériels. Il initialise chacun des éléments le constituant du point de vue horloge, initialise la gestion de chacune des mémoires (SRAM, EPROM₁, VRAM). Le starter initialise également certaines structures du système d'exploitation, telles que les tables, les données, etc...

Le gestionnaire d'incident GI s'occupe de tous les incidents de fonctionnement du système et de chacune des applications et permet soit de récupérer l'incident, soit de mettre un terme au fonctionnement de l'application ou de l'élément du système qui connait cet incident (on dit dans ce cas que le gestionnaire d'incident GI avorte l'élément du système ou l'application défectueuse).

Le gestionnaire d'accès à un terminal est un gestionnaire pour la mise au point du système d'exploitation GPOS et des applications associées. Il assure la connexion avec tout vidéoterminal sur lequel travaille un opérateur en train de mettre au point le système d'exploitation. Il est associé étroitement au gestionnaire IOmX qui permet plus spécialement la communication avec l'opérateur humain lui-même.

Le système d'exploitation GPOS et l'ensemble des applications qui sont associées à celui-ci est trop volumineux pour être implémenté dans une mémoire de type PROM. C'est la raison pour laquelle il est implémenté dans la mémoire vive SRAM. Lors de la mise en route de la carte portant GPU, un programme spécial appelé INIT implémenté dans la mémoire EPROM₁ est mis en oeuvre dès que chacun des éléments de la carte a été remis à zéro et que la fonction d'interconnexion avec le bus PSB a été effectuée. Ce programme INIT, est chargé du transfert du système d'exploitation et des applications associées en mémoire vive SRAM depuis les mémoires à disques appartenant à l'ordinateur ORD où le système GPOS et les applications en question sont stockés en permanence. Dès que le programme INIT a terminé son travail, GPOS et les applications A₁ à Aₙ étant chargés dans SRAM, le programme INIT se tait et passe la main à GPOS, et plus spécifiquement au gestionnaire ST qui initialise alors tous les éléments constituant le système d'exploitation. Cette opération de transfert du travail effectué respectivement par INIT et le gestionnaire ST est transparente pour tout utilisateur externe à GPU.

Les différentes entités constituant GPOS, aussi bien que les applications qui sont associées à ce dernier peuvent dialoguer entre elles par l'intermédiaire de ce qu'il est convenu d'appeler des appels moniteur (System call). Ces appels moniteur sont utilisés lorsque toute entité du système d'exploitation (toute application) désire faire appel à une autre structure pour accomplir une fonction (un travail) qu'elle ne sait pas faire. A un appel moniteur doit toujours être associé un certain nombre de paramètres définissant précisément la fonction que l'entité considérée (ou l'application considérée) cherche a faire accomplir par une autre entité (ou une autre application).

L'ensemble des paramètres définissant l'ensemble des fonctions accomplies par le système (ou les applications) est rangé dans une zone mémoire spéciale de SRAM appelée pile.

Une entité ou une application considérée peut donc communiquer avec une autre par un, voire plusieurs appels moniteur. Cet ensemble d'appels permettant à deux entités de communiquer entre elles est symbolisé par des flèches doubles à la figure 3. Ainsi, les entités A₁, A₂, A₃,...Aₙ communiquent avec le gestionnaire d'application GA par l'intermédiaire des ensembles d'appels moniteur F₁, F₂, F₃, Fₙ.

L'ensemble des applications A₁ à Aₙ communique avec le noyau central NY par l'intermédiaire de l'ensemble d'appels FAᵢ.

le serveur d'intercommunication SA communique avec l'application Aₙ par l'intermédiaire de l'ensemble d'appels FSₙ alors qu'il communique avec l'application A₁ par l'intermédiaire de l'ensemble d'appels FS₁.

De même, la communication entre le noyau central NY et respectivement les différents gestionnaires GA, SA, GI, GC, IOMX, GAT, ST s'effectue par l'intermédiaire des ensembles d'appels moniteur FG₁, FG₂, FG₃, FG₄, FG₅,FG₆,FG₀.

Ainsi qu'il a été dit plus haut, les applications A₁ à Aₙ sont autonomes et indépendantes les unes des autres. Elles ne nécessitent pas de ressources extérieures pour tourner. Elles ont seulement besoin de données d'entrée/sortie ou de commandes pour fonctionner, ces données d'entrée/sortie étant par exemple fournies par l'ordinateur ORD ou par toutes autres cartes extérieures à la carte qui porte GPU, par exemple une autre carte de même type, qu'on peut dénommer GPUᵢ connectée au même bus PSB. De même les commandes peuvent être fournies soit par l'ordinateur ORD, soit encore par une autre carte GPUᵢ.

Les interférences entre applications sont interdites, ce qui implique que toute erreur qui arrive sur l'une d'entre elles est indifférente à l'autre et que les espaces données propres à chacune des applications sont physiquement distincts dans la mémoire SRAM.

Toutefois, ainsi qu'il a été mentionné plus haut, deux applications peuvent être interactives entre elles par l'intermédiaire d'appels moniteur envoyés au serveur d'intercommunication SA. Ainsi donc les deux applications A₁ et Aₙ sont interactives par l'intermédiaire des deux ensembles d'appels moniteur FS₁ et FSₙ adressés à SA. Dans ce cas les données et commandes d'une des deux applications, par exemple A₁ sont émises par l'autre application ici Aₙ. L'interaction entre chacune de ces deux applications A₁ et Aₙ peut avoir lieu par exemple lorsque A₁ demande à SA de faire intervenir An pour lui fournir soit un service soit des informations particulières, soit pour participer au service de base offert par GPOS dans son ensemble. Il est clair que A₁ et Aₙ peuvent être soit sur la même carte GPU soit sur des cartes différentes, par exemple GPU et GPUᵢ.

Au sein du système d'exploitation, une application est identifiée par deux moyens, un numéro d'application et un nom d'application. Elle est représentée par une structure spéciale appelée JCB (pour l'expression anglaise Job Control block). Cette structure spéciale comprend une information statique contenant par exemple le numéro de l'application, son nom et une information dynamique représentant l'état réel de l'application, c'est à dire l'état dans lequel se trouve celle-ci à tout moment. Il va sans dire que cette information dynamique varie au cours du temps.

Bien entendu, les applications A₁ à Aₙ obéissent à des lois de priorité qui sont établies et définies par les réalisateurs des applications considérés, priorités qui sont connues du noyau NY. Certaines applications sont donc plus prioritaires que d'autres.

Une application quelconque, peut se trouver dans l'un des états qui sont représentés à la figure 5.

Les états dans lesquels peut se trouver n'importe quelle application sont désignés par E₀ à E₅.

L'état E₀ signifie que le service offert par l'application n'est pas disponible. L'application est chargée dans la mémoire SRAM mais ne peut être utilisée.

L'état E₁ est l'état par lequel on lance l'application. A cet effet le noyau NY envoie un ordre de départ requérant le service de l'application ce qui permet de faire passer celle-ci de l'état E₀ à l'état E₁. Cet ordre est appelé JR (pour le terme anglais Job request). Dans l'état E₁, on effectue en particulier les opérations d'initialisation de tous les processus qui constituent (voir plus loin) l'application et de toutes les tables qui lui correspondent en mémoire SRAM. Dans cet état, l'application ne tourne pas encore et il est de ce fait instable. Lorsque toutes les opérations d'initialisation et de mise en route de l'application sont terminées, on passe à l'état E₂.

L' état E₂ est le plus fréquent et est celui dans lequel l'application est en train de tourner. Dans cet état, l'application est en mesure de fournir les services qu'on lui demande.

L'état E₃ est l'état où l'application est en train de se terminer ou encore en train d'avorter, ceci survenant lorsque les services que l'on a demandés à l'application sont terminés. Lorsque les dernières opérations effectuées par le dernier processus de l'application sont terminées, on passe à l'état E₄, état pour lequel l'application est avortée, c'est à dire à l'arrêt. On ne peut repasser à l'état E₁ que sur un ordre spécifique du gestionnaire d'application GA, ou sur un ordre express de l'opérateur qui demande les services de l'application (cet opérateur étant un opérateur humain agissant, pas exemple au moyen d'une carte extérieure à GPU).

Il existe encore un état supplémentaire E₅ pour lequel l'application est interrompue pour une faute ou une erreur. On peut passer de l'état E₃ à E₅ lorsqu' une erreur ou une faute survient lorsque l'application est en train de se terminer (état E₃). On passe de l'état E₁ à E₅, lorsque l'erreur survient lors des opérations de mise en route de l'application. On peut alors repasser de l'état E₅ à l'état E₁ sur un ordre de l'opérateur.

On retourne à la figure 3.

Une application quelconque A₁ à An peut être divisée en une pluralité de processus accomplissant chacun une fonction déterminée. Les fonctions accomplies par chacun des processus n'ont pas de relation entre elles. A l'intérieur d'une application, des processus se voient définir des priorités. Ils peuvent avoir besoin d'être synchronisés (on dit alors que les processus ont rendez-vous) ou d'échanger des informations qui leur sont nécessaires pour accomplir les fonctions qui leur sont propres. A un instant déterminé, un seul processus est mis en oeuvre à l'intérieur de CPU lorsque l'application correspondante est dans l'état E₂. Ceci est dû au fait qu'il n'y a qu'un seul CPU dans la carte GPU. La simultanéité éventuelle de deux processus ne peut être que d'ordre Logique.

Ainsi qu'on peut le voir à la figure 3, une application Aᵢ quelconque est bâtie sur le modèle suivant. Elle comporte un processus P₀ d'initialisation de tous les éléments nécessaires au fonctionnement de l'application, c'est à dire de tous les différents processus qui la composent et qui sont les processus P₁,P₂,P₃,P₄ etc.. qui peuvent communiquer entre eux.

Un processus est identifié par un numéro de processus et un identificateur de l'application à laquelle il appartient. Ainsi par exemple, le processus dénommé 2.8 sera le processus P₈ de l'application A₂.

Un processus peut interagir avec un autre de la même application. Quand il se réfère à ce dernier, il donne son numéro sans l'identificateur de l'application. Cette disposition renforce l'indépendance et l'isolation des applications entre elles. En effet un processus ne peut jamais se référer à un des processus d'une autre application.

Pour le système d'exploitation GPOS, un processus est représenté par une structure de système spéciale appelée PCB (Sigle anglo-saxon de process control block). De la même manière que JCB, PCB comprend une information statique contenant par exemple le numéro du processus et l'identificateur d'application, les points d'entrée de ses propres données et de son propre code dans la mémoire SRAM, le degré de priorité, et d'autre part une information dynamique reflétant l'état réel du processus à l'instant où on lit le PCB. Un PCB a par exemple 146 bytes de long.

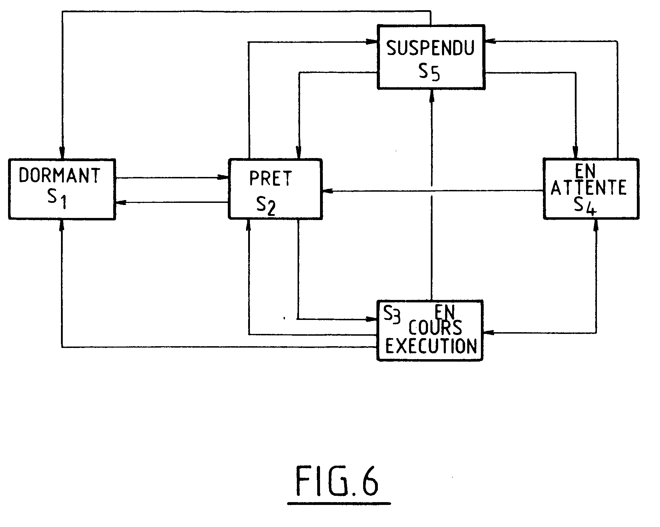

L'état réel d'un processus est l'un des états S₁ à S₅ décrit en relation avec la figure 6.

L'état S₁, appelé état "dormant" est celui dans lequel le processus est soit avorté soit terminé ou encore tel qu'il n'a jamais été démarré.

L'état S₂ est l'état "prêt" (ready) : c'est l'état dans lequel le processus est prêt à devenir actif dans le microprocesseur CPU. On passe de l'état S₁ à l'état S₂ par un ordre de départ provenant par exemple de P₀, et de S₂ à S₁ par un ordre d'avortement provenant du gestionnaire d'application GA.

L'état S₃ est l'état dit "tournant" (running) : c'est l'état dans lequel le processus est en cours d'exécution de la fonction qu'il est censé accomplir. On passe de l'état S₂ à S₃, ou réciproquement sur un appel du noyau (ou du serveur SA) lorsque le noyau décide de faire appel au processus en question parce qu'il a la plus haute priorité ou lorsque réciproquement ce dernier n'a plus la priorité la plus élevée. Il faut à ce sujet signaler que le système d'exploitation coordonne l'exécution des différents processus de manière entrelacée (il coordonne également l'exécution des différentes applications AI à An de manière entrelacée) et utilise le niveau de priorité pour gérer l'emploi du temps d'exécution de ces différents processuss. Pour ce faire, le système d'exploitation, en fait GA, utilise des mécanismes de base spéciaux, appelés routine de gestion du temps (scheduling routine) permettant d'appeler à des intervalles de temps déterminés le processus ayant la plus haute priorité. Ces procédures sont appelées au moyen soit d'appels moniteur spéciaux, soit au moyen de procédures d'interruption. On peut également passer de l'état S₃ à l'état S₁ par une ordre d'avortement provenant de GA.

L'état S₄ est celui où le processus attend un événement ou des données pour continuer à travailler. Dans ce cas, le processus ne travaille pas car il lui manque quelque chose, par exemple des données à cette fin. Toutefois il est prêt à poursuivre sa mission dès que ce qu'il est en train d'attendre devient disponible. Dès que cela est fait, le processus repasse dans l'état S₃.

Etat S₅ dit "suspendu" (suspended) : c'est le cas où l'autorité supérieure, représentée par le noyau NY décide de suspendre pour une raison qui lui est propre les travaux du processus. On peut donc passer de l'état S₅ à l'état S₄ ou de l'état S₅ à l'état S₂ sur l'ordre de la même autorité qui avait suspendu le processus.

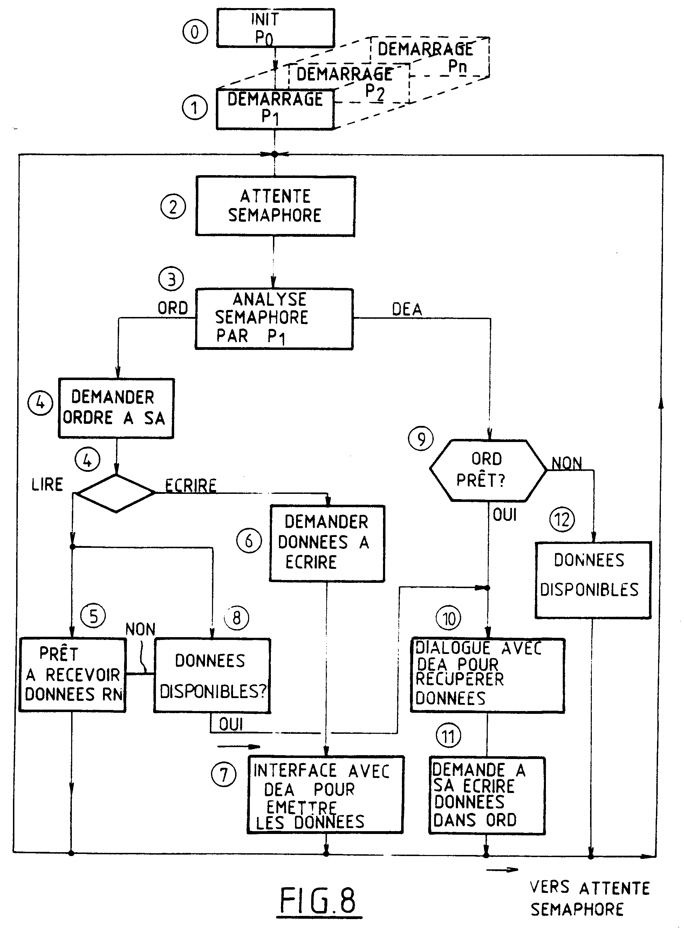

On se réfère désormais à la figure 7.

Pour permettre la synchronisation de l'exécution de deux processus ou davantage ou encore pour permettre la communication entre des processus d'une même application, le système d'exploitation fournit des outils spéciaux de type connu qui sont appelés des sémaphores. Il existe suivant l'utilisation qu'on veut en faire, à savoir synchronisation de processus ou communication interprocessus, deux types de sémaphores. Ce sont les sémaphores à jeton ou encore sémaphores d'événement (event semaphores) et les sémaphores à message (message semaphores). On désigne par ES les sémaphores à jeton et MS les sémaphores à message.

Ces sémaphores ont une structure analogue, à ceci près que les sémaphores à message sont plus longs.

Ainsi qu'on peut le voir à la figure 7, aussi bien les sémaphores ES que MS comprennent d'abord une en-tête qui définit notamment le type de message pour le sémaphore MS. Le sémaphore comprend le code de l'action à accomplir, c'est à dire le type d'action à accomplir sur celui-ci, enlever ou mettre un jeton pour un sémaphore d'événement, ou encore poster ou retirer un message pour un sémaphore MS.

Le sémaphore à message MS comprend également une partie pouvant contenir un texte. Ce texte résulte d'une convention entre les parties qui s'échangent le message. Cela peut être soit des données, soit encore des adresses de données,etc..

Un sémaphore quelconque est identifié par un numéro de sémaphore et un identificateur d'application. Ces données d'identification sont contenues dans l'en-tête du sémaphore.

Un sémaphore donné appartient à une application bien déterminée. Une opération sur ce sémaphore peut être uniquement accomplie par les processus de l'application à laquelle le sémaphore appartient. Quand un processus se réfère à un sémaphore, il l'identifie uniquement par son numéro de sémaphore, sans l'identificateur d'application que ce même processus ne possède pas. Ce dispositif renforce l'isolation entre applications puisqu'un processus ne peut jamais avoir accès au sémaphore d'une autre application. Par contre tout processus d'une application déterminée peut avoir accès à n'importe quel sémaphore de cette même application à tout moment. Plusieurs processus peuvent attendre au même moment l'accès à un même sémaphore.

En ce qui concerne les sémaphores à message, il convient de rappeler que les processus exécutent des fonctions pratiquement autonomes. Cependant, tout processus peut avoir besoin à n'importe quel moment d'échanger des informations ou de recevoir des informations du monde extérieur, soit d'une autre application, soit de GPOS. C'est précisément la fonction des sémaphores à message de permettre à des processus d'une même application de s'échanger des informations, ou d'en échanger avec le monde extérieur (dans ce cernier cas, ils passent, comme dit plus haut par l'intermédiaire de SA).

Lorsque se déroule une application, celle-ci peut être sujette à erreur ou à n'importe quel type de problème qui n'est pas prévu dans le déroulement de cette application. A cet effet, le système d'exploitation GPOS comprend le gestionnaire d'incident GI dont le but est le dépannage de cette application en erreur ou qui connait un problème. Tout erreur ou problème est dénommé exception. Il en existe trois sortes qui peuvent être distinguées, à savoir :
une exception concernant un processus : un tel type d'exception conduit généralement à l'avortement du processus en cours.
exception pour une application : cette exception non liée à un processus conduit généralement à l'avortement de l'application. C'est le cas par exemple lorsqu'un incident se produit lors de l'exécution d'une routine spéciale de gestion d'interruption (on rappelle que CPU gère un certain nombre d'interruptions).
exception pour le système : il s'agit d'une erreur extrêmement importante qui n'est pas associée à une application en particulier et qui conduit à la mort du système.

Lorsqu'une exception survient, un message effectuant un rapport sur cette exception est construit et stocké dans soit PCB pour une exception de processus, soit JCB pour une exception d'application, soit dans une zone spéciale du système d'exploitation GPOS, s'il s'agit d'une exception pour le système.

Le format général d'un message d'exception comprend d'abord une en-tête spécifique de ce message contenant notamment la signification générale de ce message s'il s'agit par exemple d'une exception pour un processus ou d'une exception pour une application, etc... Cette entête est suivie d'informations concernant le type d'exception à l'intérieur de la sorte d'exception et identifiant l'entité connaissant cette exception. Ces informations sont suivies alors d'informations spécifiques fonction du type d'erreur et donnant par exemple l'endroit où se situe cette erreur, etc...

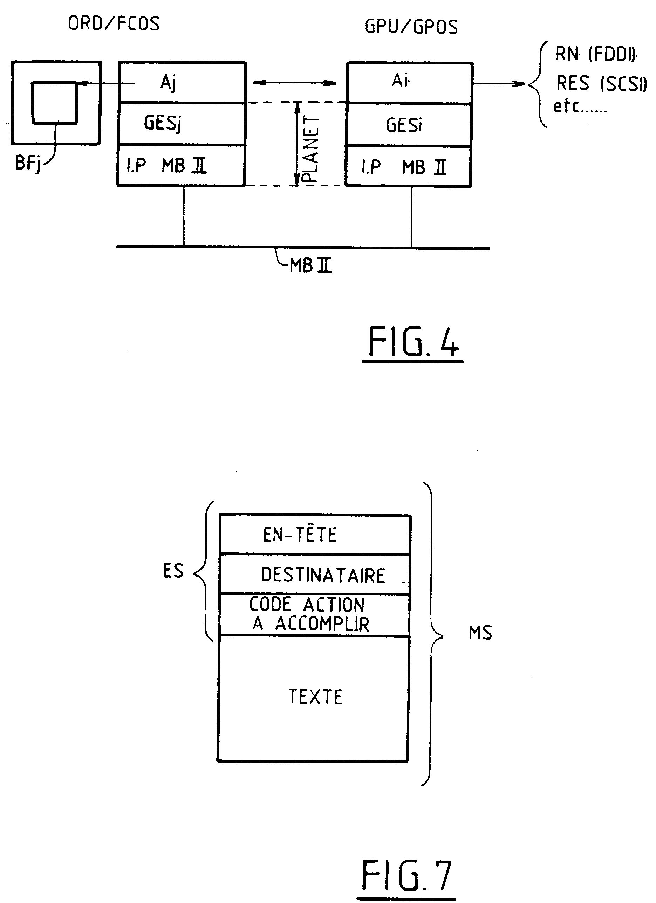

On se reporte à la figure 4 qui montre un exemple concret de contexte dans lequel travaille une application Aᵢ, celle-ci organisant le transfert des données depuis le MULTIBUS II vers un réseau RN ou vice versa, ce réseau RN pouvant être défini par une liaison de type FDDI ou encore SCSI ou encore ETHERNET.

Si l'on considère les fonctions mises en oeuvre par GPU, sous le contrôle de son système d'exploitation GPOS, sous forme d'empilage classique de couches, on trouve successivement depuis la couche la plus haute jusqu'à la couche la plus basse l'application Aᵢ, la gestion des entrées/sorties GESᵢ et l'interface physique MULTIBUS II, cette dernière étant définie par la norme IEEE1296 précitée.

Du côté de l'ordinateur ORD travaillant sous le contrôle de son système d'exploitation, par exemple de type GCOS7 de la compagnie BULL S.A., système d'exploitation mis en oeuvre par exemple sur les ordinateurs DPS7000 fabriqués par cette même société, on trouve successivement de haut en bas, l'application Aⱼ, le gestionnaire d'entrée/sortie GESⱼ et l'interface physique MULTIBUS II, qui est analogue à celle qu'on trouve sur la carte GPU. L'ensemble des deux couches constituées par l'interface physique MULTIBUS II et le gestionnaire d'entrée/sortie, qu'il s'agissent de GESⱼ ou GESᵢ est connu sous le nom de protocole PLANET mis au point par la société demanderesse et décrit dans le brevet français numéro 2 633 414 déposé par la demanderesse est ayant pour titre "Système informatique à interconnexion centrale".

L'application Aⱼ consiste ou à constituer dans une zone mémoire spéciale BFⱼ de l'ordinateur ORD, une pluralité de trames destinées à être envoyées par exemple sur un réseau RN de type FDDI, ou à simplement préparer une zone mémoire spéciale vide BFⱼ destinée à recevoir des trames provenant de RN. Ces zones mémoires spéciales BFⱼ, BF'ⱼ sont appelées buffers (terminologie anglo-saxonne). Aⱼ donne au gestionnaire d'entrée/sortie GESⱼ les adresses et les longueurs de ces buffers et constitue en même temps des blocs de commande destinés à Aᵢ. Ces blocs de commande consistent à indiquer à Aᵢ qu'il faut soit effectuer un transfert de données depuis BFⱼ vers RN, soit aller remplir BFⱼ avec des données provenant de RN. Ces blocs de commande sont également transmis à GESⱼ. Le gestionnaire d'entrée/sortie GESⱼ prend en compte ces données et blocs de commande, constitue des trames suivant le protocole PLANET et les envoie sur le MULTIBUS II. En arrivant sur GPU, les trames établies selon ce dernier protocole sont prises en charge par le système d'exploitation, au niveau du serveur SA qui connait le protocole PLANET. Une fois que SA a placé les données utiles des trames en question dans la mémoire VRAM et les blocs de commande dans SRAM (se reporter à la demande de brevet français déposée conjointement à la présente demande), il réveille alors l'application Aᵢ concernée. Celle-ci va donc prendre en charge l'envoi de ces données utiles vers le réseau RN ou vers ORD.

De manière plus précise, la manière dont sont transmises des données utiles depuis l'ordinateur ORD vers le réseau RN et réciproquement est illustrée par l'organigramme de la figure 8.

Les opérations successives de ce dernier sont les suivantes :
1 : le noyau NY réveille l'application Ai et démarre donc le processus P₀ appelé encore INIT. Ainsi qu'il a été dit plus haut ce processus initialise l'application et par conséquent un certain nombre de tables propres à celle-ci. Il initialise ensuite le dispositif d'adaptation DEA.

On passe ensuite à l'Opération 1.

1 : Le processus INIT lance ensuite le premier processus P₁. Dans l'exemple de réalisation décrit ici, l'application Aᵢ est composée des processus P₀ et P₁. Dans le cas où l'application a un nombre de processus supérieur, dans cette opération 1, les différents processus P₁, P₂,...Pₙ sont démarrés les uns après les autres. Une fois P₁ démarré, l'application Aᵢ est dans l'état E₂ (tournant). Elle reste dans cet état pour traiter ensuite tous les transferts de trames, que ce soit à l'émission ou à la réception. Le processus P₁ correspondant est dans l'état S₂ (prêt). Il convient de noter, qu'au cas où il y a n processus dans Aᵢ, ceux-ci peuvent être lancés soit par P₀, soit par l'un d'entre eux, le lancement des processus s'enchaînant dans un ordre quelconque et aléatoire.

On passe alors à l'opération 2.

2 : A un instant déterminé GPOS (SA) reçoit une demande de service de la part de l'ordinateur ORD. SA va alors voir dans l'ordinateur ORD ce qui lui est demandé et va donc chercher la ressource qui lui convient pour accomplir ce service. Cette ressource est en fait l'application correspondante à Aᵢ, c'est à dire Aj qui va chercher dans le buffer BFⱼ, les trames destinées à être envoyées sur le réseau RN. SA sait alors qu'il a besoin de mettre en oeuvre l'application Aᵢ et il poste alors un message dans le sémaphore correspondant de cette application et il donne alors la main à celle-ci : il la réveille.

On passe alors à l'opération 3 :

3 : Le processus P₁ analyse alors le sémaphore et en tire les conséquences en se demandant quel est l'initiateur de l'opération : est-ce le dispositif adaptateur DEA ou l'ordinateur ORD. S'il s'agit du premier, on passe à l'opération 9, s'il s'agit du second on passe à l'opération 4.

4 : P₁ demande alors l'ordre qui vient de ORD à SA qui va le chercher dans la mémoire de ORD : S'agit-il d'une opération de lecture ou s'agit-il d'une opération d'écriture ? Dans le cas où il s'agit d'une opération de lecture, on passe à l'une des deux opérations 5 et 8. Dans le cas où il s'agit d'une opération d'écriture, on passe à l'opération 6.

5 : Dans cette opération, l'ordinateur ORD indique au dispositif GPU qu'il est prêt à recevoir des données provenant du réseau RN. S'il n'y a pas de données disponibles provenant du réseau, on passe de l'opération 5 à l'opération 2.

8 : Dans cette opération, on examine si des données provenant de DEA, c'est à dire du réseau RN sont disponibles. S'il n'y a aucune donnée de disponible, on passe en 5. Si des données sont disponibles, on passe en 10.

10 : Un dialogue s'instaure alors entre l'application, ou plus exactement entre son processus P₁ et le dispositif adaptateur DEA pour localiser ces données (DEA sait on sont ces données) dans la mémoire VRAM. En ce qui concerne ce dialogue, on se référera d'une part à la demande de brevet français 89 10156 précitée et à la demande de brevet français déposée conjointement à la présente demande. Dès que ce dialogue est terminé, on passe à l'opération 11.

11 : Dans cette opération, P₁ demande au serveur d'application SA d'écrire les données qui ont été stockées dans VRAM, dans le buffer alloué à cet effet dans l'ordinateur ORD, c'est à dire BFⱼ. Pour ce faire, SA utilise le protocole PLANET. On retourne alors à l'opération 2.

6 : SA a donné à P₁ l'ordre d'écrire les données (voir 4). Ce dernier demande alors à SA les données qu'il faut écrire. SA va alors chercher les données qui sont dans le buffer BFⱼ en dialoguant avec ORD, au moyen du protocole PLANET. Ces données sont alors stockées dans la mémoire VRAM. On peut alors passer à l'opération suivante 7.

7 : Il y alors dialogue entre P₁ et le dispositif adaptateur DEA, de la manière indiquée dans les deux demandes de brevet précitées pour émettre les données vers le réseau RN à travers l'interface IHA et le dispositif DEA. Une fois que les données ont été extraites de VRAM et sont sur le réseau RN, on retourne en 2.

Si le dispositif adaptateur DEA en réponse à l'analyse effectuée à l'opération 3 est désigné comme initiateur, on passe en 9 :
9 : P₁ vérifie si l'ordinateur ORD est prêt à recevoir des données. Si cela n'est pas le cas, on passe à l'opération 12 où les données sont disponibles dans la mémoire VRAM (de 12 on repasse en 2).

Si l'ordinateur ORD est prêt à recevoir les données, on passe alors à l'opération 10 déjà décrite.

## Revendications

1. Système d'exploitation (GPOS) pour dispositif universel de couplage (GPU) d'un bus d'ordinateur (PSB) à au moins une liaison spécifique d'un réseau (RN), le dispositif comprenant :
- un microprocesseur (CPU) relié par l'intermédiaire de son bus interne (BI) à au moins une mémoire (SRAM) contenant ce système d'exploitation destiné à être exécuté par le microprocesseur,
- des moyens de transfert des trames (MPC, B₂, VRAM, B₁, DMAC) depuis le bus d'ordinateur vers la liaison et réciproquement dont le travail est organisé et géré par le microprocesseur,
caractérisé en ce que, étant associé à une pluralité d'application indépendantes entre elles (A₁ à Aₙ), il comprend :
- un noyau central (NY) gérant et organisant en temps réel le travail de chacune des applications, lorsque cette dernière est en train de tourner,
- un gestionnaire d'application (GA) qui surveille et définit l'état dans lequel doit se trouver chacune des applications,
- un serveur (SA) d'intercommunication pour les applications permettant à chacune d'entre elles de demander les services d'une autre quand cela s'avère nécessaire, le noyau, le gestionnaire et le serveur d'intercommunication communiquant entre eux par des appels moniteur (FG₀ à FG₆), les applications communiquant avec chacun de ces services de la même manière (F₁, F₂, F₃, ... Fₙ, FAᵢ).

2. Système d'exploitation (GPOS) selon la revendication 1, caractérisé en ce que toute première application peut interagir avec une seconde application par l'intermédiaire du serveur d'intercommunication (SA), en envoyant à ce dernier un premier ensemble d'appels moniteur (FS₁), le serveur envoyant alors à la seconde application (Aₙ) un second ensemble d'appels moniteur (FSₙ).

3. Système d'exploitation selon l'une des revendications 1, 2 caractérisé en ce que chaque application est représentée par une structure spéciale (JCB) comprenant d'une part une information statique permettant de l'identifier et d'autre part une information dynamique présentant l'état réel de l'application à un moment déterminé.

4. Système d'exploitation selon l'une des revendications 1, 2, 3 caractérisé en ce que une application quelconque peut se trouver dans n'importe lequel des états suivants :
- l'état E₀ signifiant que le service offert par l'application n'est pas disponible, cette dernière étant chargée dans la dite mémoire mais ne pouvant être utilisée,
- l'étant E₁ étant celui par lequel on lance l'application, et où le noyau (NY) envoie un ordre de départ requérant le service de la dite application, ce qui permet de faire passer celle-ci de l'état E₀ à l'état E₁,
- l'état E₂ étant celui où l'application est en train de tourner et par conséquent en mesure de fournir les services qu'on lui demande,
- l'état E₃ étant l'état où l'application est en train de se terminer ou en train d'avorter, lorsque les services que l'on a demandés à celle-ci sont terminés.
- l'état E₄ étant celui pour lequel l'application est avortée et survenant immédiatement après que l'état E₃ soit terminé, le passage de E₄ à E₁ ne pouvant s'éffectuer que sur un ordre spécifique du gestionnaire d'application (GA), ou encore sur un ordre de l'opérateur qui demande les services de l'application.

5. Système d'exploitation selon l'une des revendications 1, 2, 3, 4 caractérisé en ce que une application quelconque (A₁ à Aₙ) est divisée en une pluralité de processus (P₀, P₁, P₂,...Pₙ) accomplissant chacun une fonction déterminée, les fonctions de chacun de ces processus n'ayant pas de relation entre elles, chaque processus pouvant interagir avec un autre processus de la même application.

6. Système d'exploitation selon la revendication 5 caractérisé en ce que un processus est représenté par une structure système spéciale (PCB) comprenant une information statique permettant d'identifier le processus et les points d'entrée de ses propres données et de son propre code dans la dite mémoire, ainsi que son degré de priorité et d'autre part une information dynamique reflétant l'état réel du processus à l'instant où on lit la dite structure spéciale,

7. Système d'exploitation selon la revendication 5, 6 caractérisé en ce qu'il comporte une pluralité d'états qui sont les suivants :
- l'état S₁, appelé état "dormant" étant celui dans lequel le processus est soit avorté soit terminé, ou encore n'ayant jamais été démarré.
- l'état S₂ étant l'état "prêt" à savoir l'état dans lequel le processus est prêt à devenir actif,
- l'état S₃ étant l'état dit "tournant", c'est à dire l'état où le processus est en cours d'exécution de la fonction qu'on lui demande d'accomplir,
- l'état S₄ étant celui où le processus attend un événement ou des données pour continuer à travailler,
- l'état S₅ étant l'état dit "suspendu", c'est à dire l'état où le noyau (NY) décide de suspendre les travaux du processus,

8. Système d'exploitation selon la revendication 7 caractérisé en ce que, le processus P₀ d'une application étant un processus d'initialisation de l'ensemble des autres processus que comprend celle-ci, on passe de l'état S₁ à l'état S₂ par un ordre de départ provenant de ce processus d'initialisation, et de S₂ à S₁ par un ordre d'avortement provenant du gestionnaire d'application (GA),
- le passage de l'état S₂ à S₃ et réciproquement s'effectuant sur un appel du noyau (NY) ou du serveur d'intercommunication (SA), le passage de l'état S₅ à l'état S₄ ou à l'état S₂ s'effectuant sur ordre de l'autorité (noyau, gestionnaire d'application, serveur d'intercommunication) qui avait suspendu le processus.

9. Système d'exploitation selon l'une des revendications 5, 6, 7, 8 caractérisé en ce que le système comprend des sémaphores permettant la synchronisation de l'exécution de deux processus d'une même application, appelés alors sémaphores à jetons, et des sémaphores permettant la communication entre des processus d'une même application appelés alors sémaphores à messages (MS), un sémaphore donné appartenant à une application déterminée, toutes opérations sur ce sémaphore ne pouvant être accomplies que par les procédés de l'application à laquelle ce sémaphore appartient.
